# EUROPEAN PATENT APPLICATION

(11) **EP 3 636 334 A1**
(43) Date of publication of application: **15.04.2020**
(21) Application number: 17912893.9
(22) Date of filing: 22.06.2017
(51) Int. Cl.: B01D 53/18, B01D 53/50, B05B 1/20

(54) **SPRAY PIPE AND DESULFURIZATION DEVICE PROVIDED WITH SAME**

(30) Priority: 09.06.2017 JP 2017114704
(71) Applicant: Mitsubishi Hitachi Power Systems, Ltd., Yokohama-shi, Kanagawa 220-8401 (JP)
(72) Inventor: SUGITA, Satoru, Yokohama-shi Kanagawa 220-8401 (JP); USHIKU, Tetsu, Yokohama-shi Kanagawa 220-8401 (JP); SASAKI, Ryozo, Yokohama-shi Kanagawa 220-8401 (JP); YOSHIZUMI, Naoyuki, Yokohama-shi Kanagawa 220-8401 (JP); MIYACHI, Tsuyoshi, Yokohama-shi Kanagawa 220-8401 (JP); KAGAWA, Seiji, Tokyo 108-8215 (JP)
(74) Representative: Henkel & Partner mbB
(86) International application number: PCT/JP2017/023108
(87) International publication number: WO 2018/225273

(57) **Abstract**

Provided is a spray pipe (20) that is provided with: a cylindrically shaped pipe part (21) extending along an axial line (X1) in the horizontal direction and closed at a tip part; a plurality of nozzle parts disposed in a plurality of locations on the upper end part of the pipe part (21) in the vertical direction and leading an absorption liquid flowing horizontally in the pipe part (21) upwards in the vertical direction; and a leg part (23) disposed on the bottom part of the pipe part (21) in the vertical direction and having a placement surface (23a) along the horizontal direction. The leg part (23) is disposed in a state in which the placement surface (23a) faces a support surface (91a), which extends along the horizontal direction, of a pipe support (91) placed in an absorption column.

## Description

### [Technical Field]

The present invention relates to a spray pipe and a desulfurization apparatus provided with the spray pipe.

### [Background Art]

An exhaust gas system such as a boiler, installed in a power plant or the like, is provided with a desulfurization apparatus which removes sulfur oxides from exhaust gas. With the provision of the desulfurization apparatus, the amount of sulfur oxides contained in exhaust gas to be discharged to the atmosphere can be reduced.

PTL 1 and PTL 2 disclose a liquid column type desulfurization apparatus where an absorbing liquid is injected upward from a plurality of nozzles, mounted on a branch pipe (header) installed horizontally, so as to remove sulfur oxides in a combustion exhaust gas via a chemical reaction between the combustion exhaust gas and the absorbing liquid.

### [Citation List]

### [Patent Literature]

[PTL 1] Japanese Unexamined Patent Application, Publication No. Hei9-225256
[PTL 2] U.S. Patent No. 6613133

### [Summary of Invention]

### [Technical Problem]

In the liquid column type desulfurization apparatus, a downward reaction force is applied to the branch pipe as the branch pipe injects an absorbing liquid upward. Further, a downward impact force is also applied to the branch pipe when the absorbing liquid, which the branch pipe injects upward, falls and comes into contact with the branch pipe.

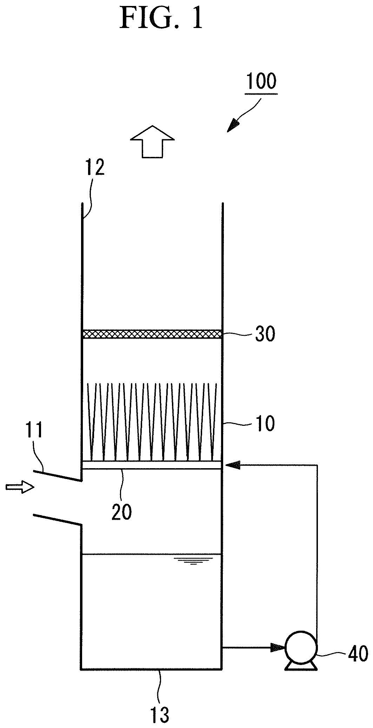

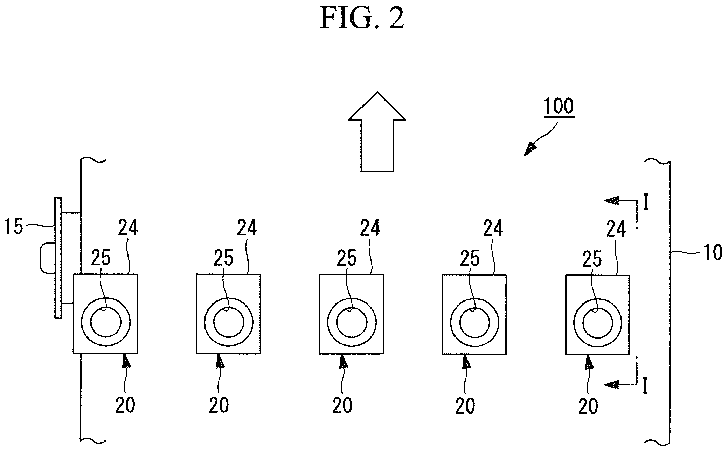

In PTL 1 (see Fig. 1 and Fig. 2), nozzles 6 which inject an absorbing liquid are mounted on a branch pipe 5, and the branch pipe 5 is supported by a plurality of support rods 9. The support rods 9 are arranged below the branch pipe so as to be orthogonal to the branch pipe 5, and the support rods 9 are separated at a distance from each other. Further, in PTL 1, the branch pipe 5 and each support rod 9 have a circular outer shape, and come into contact with each other at a position where the branch pipe 5 and each support rod 9 intersect with each other. Accordingly, there is a possibility of the branch pipe being damaged (including generation of cracks and local deformation) by local force acting at respective positions coming into contact with the support rods.

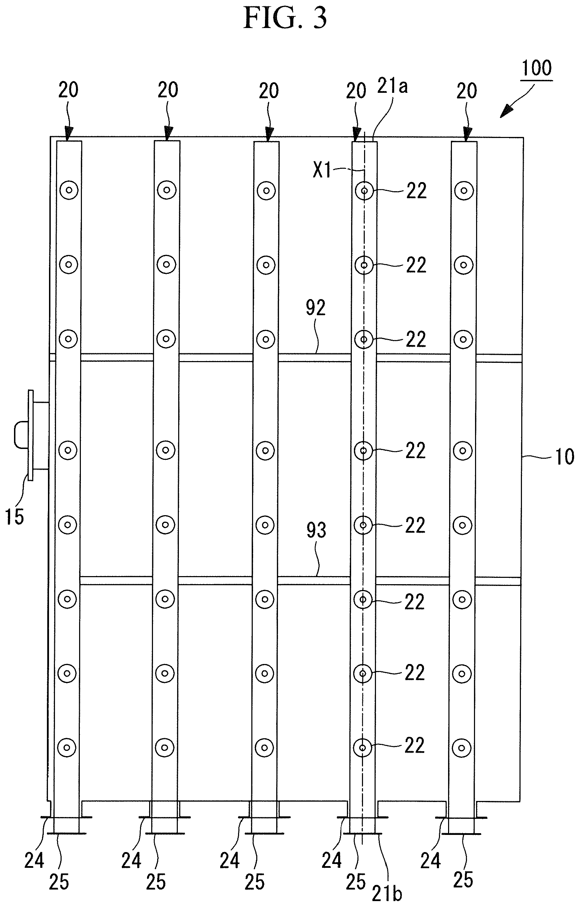

In PTL 2 (see Fig. 1 and Fig. 3), a branch pipe (header) 14, 15 is supported in a state of being restrained by U-shaped support straps 34 each having an upper end connected to a beam 32. Accordingly, there is a possibility of the branch pipe 14, 15 being damaged by local force acting at a position coming into contact with the support strap 34. Such a problem caused by local force acting on the branch pipe becomes particularly obvious when the shape of an inner peripheral surface of the support strap 34 and the shape of an outer peripheral surface of the branch pipe 14, 15 do not agree with each other. Further, such a problem may occur not only immediately after the branch pipe 14, 15 is restrained by the support strap 34 but also after a long-term use due to fatigue breakage caused by vibrations during operation of the desulfurization apparatus.

The present invention has been made under such circumstances, and an object of the present invention is to provide a spray pipe and a desulfurization apparatus provided with the spray pipe which can reduce the problem where a reaction force and an impact force are applied to the spray pipe as the spray pipe injects an absorbing liquid upward thus damaging the spray pipe.

### [Solution to Problem]

To solve the above-mentioned problem, the present invention adopts the following solutions.

A spray pipe according to one aspect of the present invention is disposed along a horizontal direction in an absorption tower formed extending along a vertical direction to form a passage for exhaust gas, and the spray pipe includes: a pipe portion having a cylindrical shape, and configured to extend along an axis in the horizontal direction, a distal end portion of the pipe portion being closed; a plurality of nozzle portions configured to guide an absorbing liquid, flowing through the pipe portion in the horizontal direction, upward in a vertical direction, the plurality of nozzle portions being arranged at a plurality of positions on an upper end portion of the pipe portion in the vertical direction; and a leg portion disposed on a lower end portion of the pipe portion in the vertical direction, and having a first surface along the horizontal direction, wherein the leg portion is disposed in a state where the first surface is made to oppositely face a second surface of a support portion installed on the absorption tower, the second surface extending along the horizontal direction.

With the spray pipe according to one aspect of the present invention, the leg portion having the first surface along the horizontal direction is disposed on the lower end portion of the pipe portion in the vertical direction. The leg portion is disposed in a state where the first surface is made to oppositely face the second surface of the support portion installed on the absorption tower. Further, a reaction force and an impact force are applied to the spray pipe as the spray pipe injects an absorbing liquid upward, and the reaction force and the impact force are transmitted from the first surface to the second surface. Accordingly, it is possible to prevent a reaction force and an impact force from being locally applied to the spray pipe thus reducing the problem of damaging the spray pipe.

In the spray pipe according to one aspect of the present invention, the leg portion may be arranged at a plurality of positions including the distal end portion of the pipe portion.

With such a configuration, while a load of the spray pipe is transmitted from the leg portion to the support portion of the desulfurization apparatus at the closed distal end portion of the pipe portion, the load of the spray pipe can be transmitted from the leg portion to the support portion of the desulfurization apparatus also at portions ranging from the intermediate portion to the distal end portion. Accordingly, compared to the case where a load of the spray pipe is not supported by the intermediate portion, it is possible to reduce the problem of the spray pipe being deflected by its own weight.

In the spray pipe according to one aspect of the present invention, the pipe portion may be made of fiber-reinforced plastic.

With such a configuration, it is possible to reduce the problem such as damage of the pipe portion caused by corrosion when the pipe portion is made of metal material, and wear of the pipe portion caused by impact or the like of an absorbing liquid on the pipe portion.

In the spray pipe according to one aspect of the present invention, a length of the pipe portion along the axis from a proximal end portion to the distal end portion may be set to 3 m or more and 15 m or less, and an outer diameter of the pipe portion may be set to 200 mm or more and 400 mm or less.

With such a configuration, it is possible to reduce the problem that the spray pipe which includes the pipe portion having a length of 3 m or more and 15 m or less and an outer diameter of 200 mm or more and 400 mm or less is damaged.

A desulfurization apparatus according to one aspect of the present invention includes: an absorption tower formed extending along a vertical direction to form a passage for exhaust gas; a spray pipe disposed in the absorption tower along a horizontal direction; a support portion installed on the absorption tower so as to support the spray pipe; and a fastening portion configured to fasten the spray pipe and the support portion to each other, wherein the spray pipe includes: a pipe portion having a cylindrical shape, and configured to extend along an axis in the horizontal direction, a distal end portion of the pipe portion being closed; a plurality of nozzle portions configured to guide an absorbing liquid, flowing through the pipe portion in the horizontal direction, upward in the vertical direction, the plurality of nozzle portions being arranged at a plurality of positions on an upper end portion of the pipe portion in the vertical direction; and a leg portion disposed on a lower end portion of the pipe portion in the vertical direction, and having a first surface along the horizontal direction, wherein the support portion has a second surface along the horizontal direction, and the spray pipe is fastened to the support portion by the fastening portion in a state where the first surface is made to oppositely face the second surface.

With the desulfurization apparatus according to one aspect of the present invention, the leg portion having the first surface along the horizontal direction is disposed on the lower end portion of the pipe portion of the spray pipe in the vertical direction. Further, the leg portion is disposed in a state where the first surface is made to oppositely face the second surface of the support portion installed on the absorption tower. Further, a reaction force and an impact force are applied to the spray pipe as the spray pipe injects the absorbing liquid upward, and the reaction force and the impact force are transmitted from the first surface to the second surface. Accordingly, it is possible to prevent a reaction force and an impact force from being locally applied to the spray pipe thus reducing the problem of damaging the spray pipe. Further, the spray pipe and the support portion are fastened to each other by the fastening portion and hence, even when a reaction force and an impact force are applied to the spray pipe, a state is maintained where the spray pipe is supported by the support portion.

In the desulfurization apparatus according to one aspect of the present invention, it may be configured such that the desulfurization apparatus further includes a plate-like member disposed between the first surface and the second surface, the fastening portion includes a fastening bolt and a fastening nut fastened to the fastening bolt, the plate-like member has a cut-away portion which allows insertion of the fastening bolt in a state where the plate-like member is disposed between the first surface and the second surface, and the plate-like member is disposed in a state where the cut-away portion is opened toward the distal end portion of the pipe portion.

To make the injection direction of an absorbing liquid injected from the spray pipe agrees with the vertical direction, it is necessary to accurately dispose the spray pipe along the horizontal plane. In disposing the spray pipe, by disposing the plate-like member having an appropriate thickness between the leg portion and the support portion, the spray pipe can be accurately disposed along the horizontal plane.

The spray pipe thermally elongates along the axis due to heating by exhaust gas. When the spray pipe thermally elongates, a force toward the closed distal end portion of the pipe portion is applied from the leg portion to the plate-like member disposed in contact with the leg portion. The plate-like member is disposed in a state where the cut-away portion opens toward the distal end portion of the pipe portion. That is, the cut-away portion of the plate-like member does not open toward the proximal end portion side of the pipe portion. Accordingly, even when a force toward the distal end portion is applied to the plate-like member from the leg portion, the plate-like member comes into contact with the fastening bolt and hence, there is no possibility of the plate-like member moving toward the distal end portion. Accordingly, it is possible to prevent the problem that the plate-like member moves toward the distal end portion thus escaping from the support portion.

In the desulfurization apparatus according to one aspect of the present invention, an insertion hole into which the fastening bolt is inserted may be formed in the first surface of the leg portion, and a length of the insertion hole in a direction along the axis may be set longer than a length of the insertion hole in a direction orthogonal to the axis.

The spray pipe thermally elongates along the axis due to heating by exhaust gas. When the spray pipe thermally elongates, the leg portion mounted on the spray pipe moves toward the closed distal end portion of the pipe portion. According to the configuration of the present invention, a length of the insertion hole in the direction along the axis is set longer. Therefore, it is possible to reduce the problem that the insertion hole comes into contact with the fastening bolt when the leg portion moves due to thermal elongation.

In the desulfurization apparatus according to one aspect of the present invention, the pipe portion may be disposed so as to avoid contact with an inner peripheral surface of the absorption tower in a state where the pipe portion is heated by exhaust gas. A distal end portion of the pipe portion is preferably disposed with a gap of 10 mm or more and 100 mm or less formed between the distal end portion and the inner wall surface of the absorption tower in a state where the pipe portion is not heated by exhaust gas.

With such a configuration, it is possible to reduce the problem that the pipe portion is heated by exhaust gas thus thermally elongating and, as a result, the distal end portion of the pipe portion comes into contact with the inner peripheral surface of the absorption tower.

### [Advantageous Effects of Invention]

According to the present invention, it is possible to provide a spray pipe and a desulfurization apparatus provided with the spray pipe which can reduce the problem where a reaction force and an impact force are applied to the spray pipe as the spray pipe injects an absorbing liquid upward thus damaging the spray pipe.

### [Brief Description of Drawings]

[Fig. 1]
   Fig. 1 is a longitudinal cross-sectional view showing the schematic configuration of a desulfurization apparatus of one embodiment of the present invention.
[Fig. 2]
   Fig. 2 is a side view of spray pipes and a portion around the spray pipes of the desulfurization apparatus shown in Fig. 1.
[Fig. 3]
   Fig. 3 is a plan view of the spray pipe on an upper stage shown in Fig. 2 as viewed from above.
[Fig. 4]

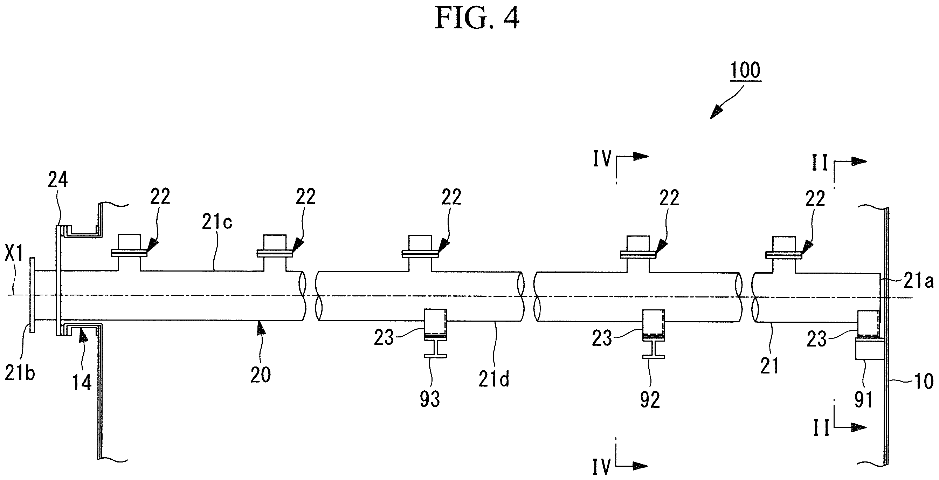

   Fig. 4 is a view of the spray pipe and a portion around the spray pipe of the desulfurization apparatus taken along arrow I-I shown in Fig. 2.
[Fig. 5]

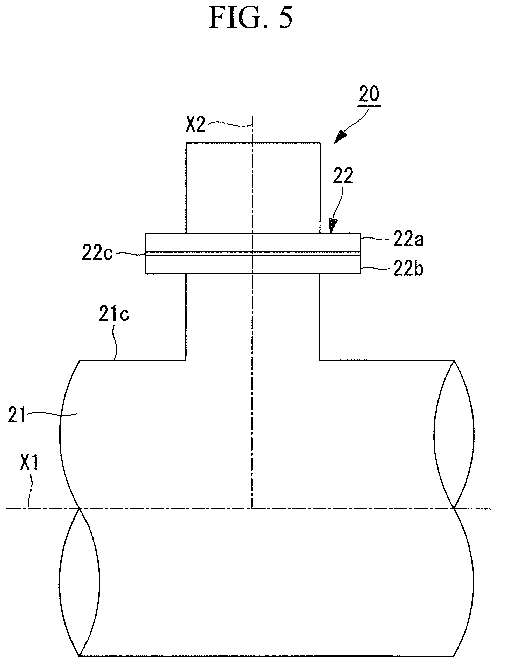

   Fig. 5 is a partially enlarged view of a nozzle portion shown in Fig. 2.
[Fig. 6]

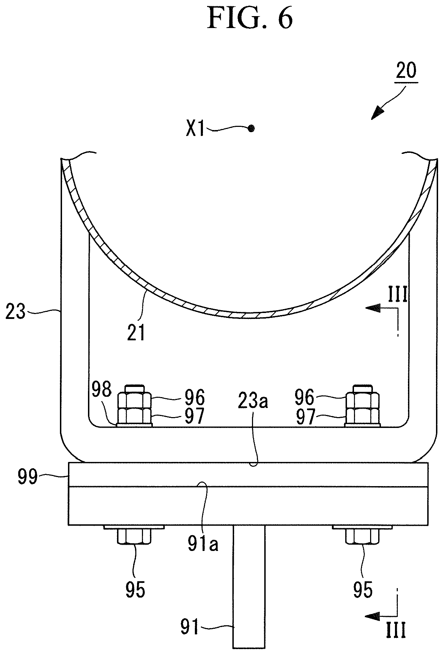

   Fig. 6 is a view of the spray pipe and a portion around the spray pipe of the desulfurization apparatus taken along arrow II-II shown in Fig. 4.
[Fig. 7]

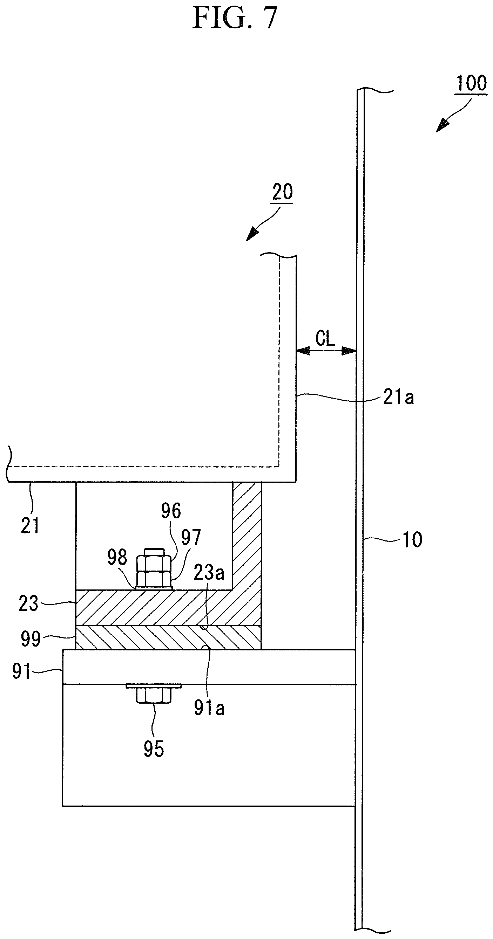

   Fig. 7 is a view of the spray pipe and the portion around the spray pipe of the desulfurization apparatus taken along arrow III-III shown in Fig. 6.
[Fig. 8]

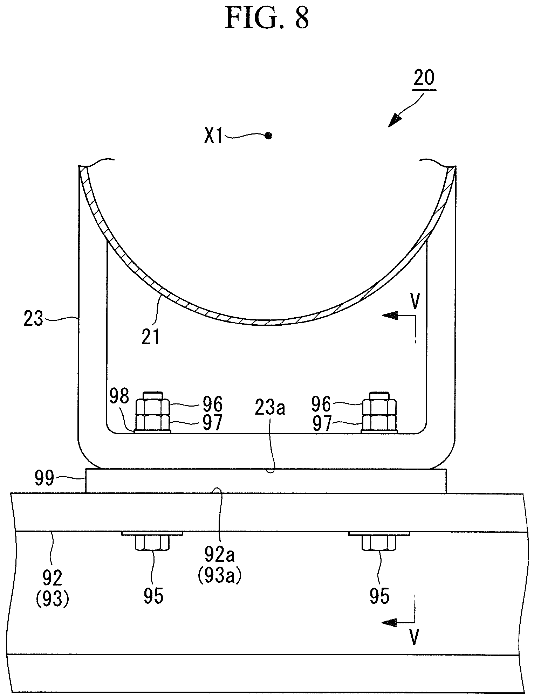

   Fig. 8 is a view of the spray pipe and the portion around the spray pipe of the desulfurization apparatus taken along arrow IV-IV shown in Fig. 4.
[Fig. 9]

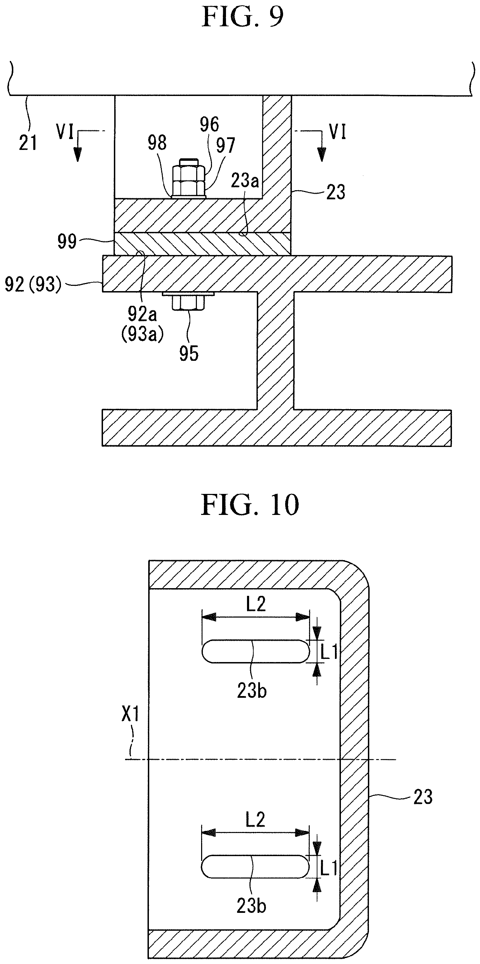

   Fig. 9 is a view of the spray pipe and the portion around the spray pipe of the desulfurization apparatus taken along arrow V-V shown in Fig. 8.
[Fig. 10]
   Fig. 10 is a cross-sectional view of a leg portion taken along arrow VI-VI shown in Fig. 9.
[Fig. 11]

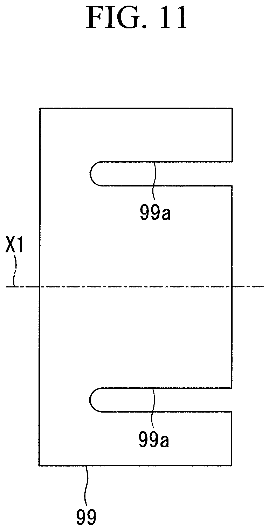

   Fig. 11 is a view of a plate-like member taken along arrow VI-VI shown in Fig. 9.
[Fig. 12]

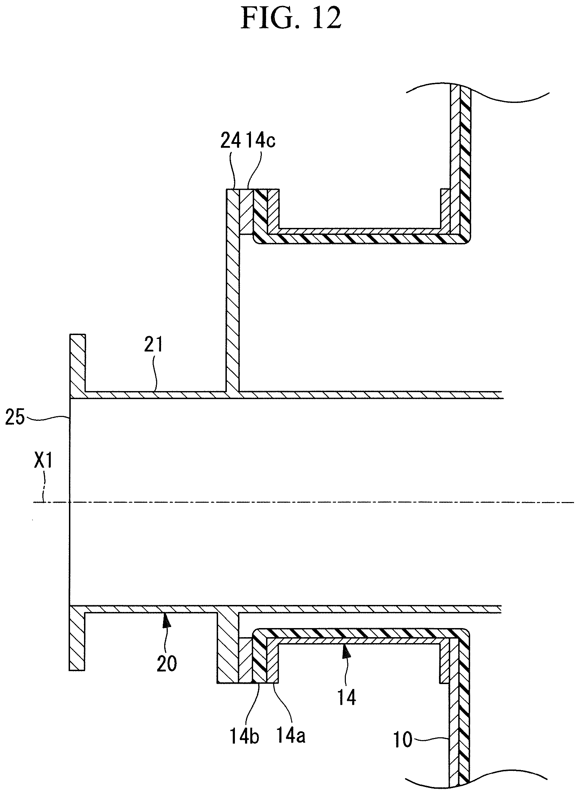

   Fig. 12 is a partially enlarged view of a mounting flange and a portion around the mounting flange of the spray pipe, shown in Fig. 4, of the desulfurization apparatus.

### [Description of Embodiments]

Hereinafter, a desulfurization apparatus 100 according to one embodiment of the present invention is described with reference to drawings.

As shown in Fig. 1, the desulfurization apparatus 100 of this embodiment includes: an absorption tower 10; spray pipes 20; a demister 30; and a circulation pump 40.

The absorption tower 10 is a cylindrical casing formed extending in the vertical direction to form a passage for exhaust gas. Exhaust gas containing sulfur oxides is introduced into the absorption tower 10 from an exhaust gas introduction portion 11 formed on a side surface of the absorption tower 10, and the absorption tower 10 guides the exhaust gas upward in the vertical direction. Further, the absorption tower 10 discharges the exhaust gas from an exhaust gas discharge portion 12 formed on the upper side of the absorption tower 10 in the vertical direction.

The spray pipes 20 are cylindrical members arranged in the inside of the absorption tower 10 along the horizontal direction. As shown in Fig. 1, the spray pipes 20 inject an absorbing liquid upward in the vertical direction thus causing exhaust gas introduced from the exhaust gas introduction portion 11 and the absorbing liquid to be brought into gas-liquid contact with each other. In this embodiment, the absorbing liquid is a liquid containing lime so that sulfur oxides contained in the exhaust gas is removed by the lime-gypsum method. The absorbing liquid injected from the spray pipes 20 accumulates at a bottom portion 13 of the absorption tower 10. The absorbing liquid accumulated at the bottom portion 13 is supplied to the spray pipes 20 by the circulation pump 40.

The demister 30 is a folded-plate-shaped demister, for example. The demister 30 removes a mist of absorbing liquid generated in the inside of the absorption tower 10 via physical impact.

Next, the structure of the spray pipes 20, which the desulfurization apparatus 100 of this embodiment includes, and a portion around the spray pipes 20 is described in detail.

Fig. 2 is a side view of the spray pipes 20 and a portion around the spray pipes 20 of the desulfurization apparatus 100 shown in Fig. 1.

As shown in Fig. 2, in the desulfurization apparatus 100, the plurality of spray pipes 20 are inserted into the inside of the absorption tower 10 from the outside of the absorption tower 10. In the desulfurization apparatus 100, five spray pipes 20 are arranged at a predetermined position in the vertical direction, and are arranged at equal intervals in the horizontal direction. The number of spray pipes 20 which the desulfurization apparatus 100 includes may be set to a desired number other than five depending on a size or the like of the absorption tower 10. The spray pipes 20 may be arranged such that a plurality of spray pipes 20 are arranged on each of a plurality of stages at different positions in the vertical direction.

As shown in Fig. 2, a mounting flange 24 and a supply port 25 are formed on each spray pipe 20. The mounting flange 24 is a member for mounting the spray pipe 20 on an opening portion 14 formed on the absorption tower 10. The mounting flange 24 is mounted on the opening portion 14 of the absorption tower 10 by a plurality of fasteners (not shown in the drawing) (see Fig. 4).

An access hatch 15, which allows an operator to pass through the side surface of the absorption tower 10, is mounted on the side surface of the absorption tower 10. The access hatch 15 can be also used when a maintenance component or the like is brought to the inside from the outside of the absorption tower 10 or when a used component or the like is carried out to the outside from the inside of the absorption tower 10.

Fig. 3 is a plan view of the five spray pipes 20 shown in Fig. 2 as viewed from above. Fig. 4 is a view of the spray pipe 20 and a portion around the spray pipe 20 of the desulfurization apparatus 100 taken along arrow I-I shown in Fig. 2.

As shown in Fig. 3 and Fig. 4, each spray pipe 20 includes a pipe portion 21, a plurality of nozzle portions 22, and a plurality of leg portions 23.

The pipe portion 21 is a circular cylindrical member which extends in a linear shape along an axis X1 in the horizontal direction from a proximal end portion 21b to a distal end portion 21a, and has the closed distal end portion 21a. The supply port 25 is formed on the proximal end portion 21b of the pipe portion 21, and an absorbing liquid is supplied to the supply port 25 from the circulation pump 40. The distal end portion 21a of the pipe portion 21 is closed so that the absorbing liquid supplied to the inside of the pipe portion 21 from the supply port 25 is guided to the plurality of nozzle portions 22. A length of the pipe portion 21 along the axis X1 from the proximal end portion 21b to the distal end portion 21a is set to 3 m or more and 15 m or less. Further, an outer diameter of the pipe portion 21 is set to 200 mm or more and 400 mm or less.

The plurality of nozzle portions 22 are members arranged at equal intervals along the axis X1 at a plurality of positions on an upper end portion 21c of the pipe portion 21 in the vertical direction. In this embodiment, Fig. 5 is a partially enlarged view of the nozzle portion 22 shown in Fig. 2. As shown in Fig. 5, the nozzle portion 22 includes a spray nozzle 22a, a nozzle holder 22b, and a gasket 22c.

The spray nozzle 22a is a member which guides an absorbing liquid, flowing through the pipe portion 21 in the horizontal direction along the axis X1, upward in the vertical direction along an axis X2. The spray nozzle 22a injects the absorbing liquid, supplied from the circulation pump 40, upward in the vertical direction thus causing exhaust gas and the absorbing liquid to be brought into gas-liquid contact with each other in the inside of the absorption tower 10. The spray nozzle 22a is made of SiC (silicon carbide), for example.

The nozzle holder 22b is a member which is mounted on the upper end portion 21c of the pipe portion 21, and is formed into a circular cylindrical shape along the axis X2 in the vertical direction. As shown in Fig. 5, the lower end side of the spray nozzle 22a is inserted into the inside of the nozzle holder 22b, and a flange is formed at an upper end of the nozzle holder 22b. Further, a flange is formed on the spray nozzle 22a, and the flange has the same shape as the flange of the nozzle holder 22b. As shown in Fig. 5, the flange of the spray nozzle 22a and the flange of the nozzle holder 22b are fastened to each other by a plurality of fasteners (not shown in the drawing) with the annular gasket 22c (made of butyl rubber, for example) interposed therebetween.

As shown in Fig. 4, the plurality of leg portions 23 are members arranged on a lower end portion 21d of the pipe portion 21. The leg portions 23 are arranged at a plurality of positions including the distal end portion 21a of the pipe portion 21. The plurality of leg portions 23 transmits a load of the pipe portion 21 to a pipe support (support portion) 91, a support beam (support portion) 92, and a support beam (support portion) 93. The pipe support 91, the support beam 92, and the support beam 93 are installed on the absorption tower 10. The pipe support 91, the support beam 92, and the support beam 93 are members which are installed on the absorption tower 10 so as to support the spray pipes 20. A reaction force applied to the pipe portion 21 when the pipe portion 21 injects an absorbing liquid and an impact force generated when an absorbing liquid falls and comes into contact with the pipe portion 21 are transmitted to the absorption tower 10 by way of the plurality of leg portions 23.

The leg portion 23 arranged at the distal end portion 21a of the pipe portion 21 is described.

Fig. 6 is a view of the spray pipe 20 and a portion around the spray pipe 20 of the desulfurization apparatus 100 taken along arrow II-II shown in Fig. 4. Fig. 7 is a view of the spray pipe 20 and the portion around the spray pipe 20 of the desulfurization apparatus 100 taken along arrow III-III shown in Fig. 6. The leg portion 23 shown in Fig. 6 and Fig. 7 are mounted on the lower end portion 21d of the distal end portion 21a of the pipe portion 21. As shown in Fig. 6, an upper end of the leg portion 23 is mounted on the pipe portion 21. Further, a lower end of the leg portion 23 has an installation surface (first surface) 23a. The installation surface 23a is a flat installation surface extending along the horizontal plane. However, the installation surface 23a may adopt another mode. For example, the installation surface 23a may have a polygonal shape or an arcuate shape in cross section orthogonal to the axis X1.

As shown in Fig. 7, the pipe support 91 made of a metal material or the like is installed on an inner wall surface of the absorption tower 10. An upper end of the pipe support 91 has a support surface (second surface) 91a. The support surface 91a is a flat installation surface extending along the horizontal plane. However, the support surface 91a may adopt another mode. For example, the support surface 91a may have a polygonal shape or an arcuate shape in cross section orthogonal to the axis X1. An upper surface of the support surface 91a may be covered by a lining made of a resin so as to protect the support surface 91a from corrosion or the like.

As shown in Fig. 6 and Fig. 7, a shim plate (plate-like member) 99 is disposed between the installation surface 23a on the lower end of the leg portion 23 and the support surface 91a on the upper end of the pipe support 91.

As shown in Fig. 6 and Fig. 7, the leg portion 23 is disposed in a state where the installation surface 23a is made to oppositely face the support surface 91a.

The shim plate 99 is a member which adjusts a position of the installation surface 23a in the vertical direction with respect to the support surface 91a so as to install the pipe portion 21 along the horizontal direction. In Fig. 6 and Fig. 7, the shim plate 99 is disposed between the installation surface 23a and the support surface 91a. However, when the shim plate 99 is unnecessary for installing the pipe portion 21 along the horizontal direction, the shim plate 99 may not be disposed. In such a case, the pipe portion 21 is disposed in a state where the installation surface 23a and the support surface 91a come into direct contact with each other. Further, to install the pipe portion 21 along the horizontal direction, the shim plate 99 having an appropriate thickness in the vertical direction may be used. Alternatively, a plurality of shim plates 99 may be disposed in an overlapping manner.

As shown in Fig. 6 and Fig. 7, the leg portion 23, the pipe support 91, and the shim plate 99 are fastened to each other by fastening bolts (fastening portions) 95 and fastening nuts (fastening portions) 96, 97. A shaft portion of each fastening bolt 95 is inserted into the leg portion 23, the pipe support 91, and the shim plate 99 from a lower side of the pipe support 91. The fastening nuts 96, 97 are fastened to the shaft portion of the fastening bolt 95. A washer 98 is disposed between the fastening nut (fastening portion) 97 and the leg portion 23.

Two fastening nuts 96, 97 are fastened to the shaft portion of each fastening bolt 95 so as to allow the formation of a gap below the fastening nut 97. The configuration where a gap is not formed below the fastening nut 97 is advantageous in the point that the leg portion 23, the pipe support 91, and the shim plate 99 are firmly connected with each other. On the other hand, in the configuration where the leg portion 23, the pipe support 91, and the shim plate 99 are firmly connected with each other, there is a possibility of a fastened portion being deformed or damaged when the pipe portion 21 is deformed due to thermal expansion. In this embodiment, a gap is formed below the fastening nut 97. In such a state, the fastening nut 96 is fastened. Alternatively, the fastening nut 97 is fastened and, thereafter, the fastening nut 96 is fastened and, further, the fastening nut 97 is loosened. With such operations, a fastened state can be brought about where the fastening nut 96 and the fastening nut 97 do not move in the vertical direction. In this case, even when the pipe portion 21 is deformed due to thermal expansion, it is possible to reduce the problem that the fastened portion is deformed or damaged.

Next, the leg portion 23 disposed at an intermediate portion of the pipe portion 21 between the distal end portion 21a and the proximal end portion 21b is described.

Fig. 8 is a view of the spray pipe 20 and the portion around the spray pipe 20 of the desulfurization apparatus 100 taken along arrow IV-IV shown in Fig. 4. Fig. 9 is a view of the spray pipe 20 and the portion around the spray pipe 20 of the desulfurization apparatus 100 taken along arrow V-V shown in Fig. 8. The leg portion 23 shown in Fig. 8 and Fig. 9 is mounted on the intermediate portion of the pipe portion 21 between the distal end portion 21a and the proximal end portion 21b. As shown in Fig. 8, an upper end of the leg portion 23 is mounted on the pipe portion 21. Further, a lower end of the leg portion 23 has an installation surface (first surface) 23a. The installation surface 23a is a flat installation surface extending along the horizontal plane. However, the installation surface 23a may adopt another mode. For example, the installation surface 23a may have a polygonal shape or an arcuate shape in cross section orthogonal to the axis X1.

As shown in Fig. 3 and Fig. 8, the support beam 92 and the support beam 93, which are made of a metal material or the like and extend in the horizontal direction, are installed on the absorption tower 10. An upper end of the support beam 92 has a support surface (second surface) 92a. In the same manner, an upper end of the support beam 93 has a support surface (second surface) 93a.

The support surface 92a, 93a is a flat installation surface extending along the horizontal plane. However, the support surface 92a, 93a may adopt another mode. For example, the support surface 92a, 93a may have a polygonal shape or an arcuate shape in cross section orthogonal to the axis X1. An upper surface of the support surface 92a, 93a may be covered by a lining made of a resin so as to protect the support surface 92a, 93a from corrosion or the like.

As shown in Fig. 8 and Fig. 9, a shim plate 99 is disposed between the installation surface 23a on the lower end of the leg portion 23 and the support surface 92a, 93a on the upper end of the support beam 92, 93.

As shown in Fig. 8 and Fig. 9, the leg portion 23 is disposed in a state where the installation surface 23a is made to oppositely face the support surface 92a, 93a.

The shim plate 99 is a member which adjusts a position of the installation surface 23a in the vertical direction with respect to the support surface 92a, 93a so as to install the pipe portion 21 along the horizontal direction. In Fig. 8 and Fig. 9, the shim plate 99 is disposed between the installation surface 23a and the support surface 92a, 93a. However, when the shim plate 99 is unnecessary for installing the pipe portion 21 along the horizontal direction, the shim plate 99 may not be disposed. In such a case, the pipe portion 21 is disposed in a state where the installation surface 23a and the support surface 92a, 93a come into direct contact with each other. Further, to install the pipe portion 21 along the horizontal direction, the shim plate 99 having an appropriate thickness in the vertical direction may be used. Alternatively, a plurality of shim plates 99 may be disposed in an overlapping manner.

As shown in Fig. 8 and Fig. 9, the leg portion 23, the support beam 92, 93 and the shim plate 99 are fastened to each other by fastening bolts 95 and fastening nuts 96, 97. A shaft portion of each fastening bolt 95 is inserted into the leg portion 23, the support beam 92, 93 and the shim plate 99 from a lower side of the support beam 92, 93. The fastening nuts 96, 97 are fastened to the shaft portion of the fastening bolt 95. A washer 98 is disposed between the fastening nut 97 and the leg portion 23.

Two fastening nuts 96, 97 are fastened to the shaft portion of each fastening bolt 95 so as to allow the formation of a gap below the fastening nut 97.

A method for manufacturing the spray pipe 20 is described. The spray pipe 20 in this embodiment is made of fiber-reinforced plastic, and is formed by integrally molding the pipe portion 21, the nozzle holders 22b of the nozzle portions 22, and the leg portions 23. On the other hand, each spray nozzle 22a mounted on each nozzle holder 22b is made of SiC (silicon carbide), for example.

The spray pipe 20 in this embodiment is manufactured such that the pipe portion 21, the nozzle holders 22b of the nozzle portions 22, and the leg portions 23 are formed into an integral body by molding using fiber-reinforced plastic and, thereafter, the spray nozzles 22a are mounted on the nozzle holders 22b. There is a high possibility of wear to the spray pipe 20 due to impact or the like of an absorbing liquid which the spray pipe 20 injects upward. In this embodiment, the spray pipe 20 is made of fiber-reinforced plastic thus having high resistance against wear. The spray pipe 20 also has high resistance against corrosion.

A metal material (for example, UNS S31254 or Hastelloy C-276) may be used as a material for forming the spray pipe 20 in place of fiber-reinforced plastic.

Next, insertion holes 23b formed in the leg portion 23 are described.

Fig. 10 is a cross-sectional view of the leg portion 23 taken along arrow VI-VI shown in Fig. 9. As shown in Fig. 10, the insertion holes 23b are formed in the installation surface 23a of the leg portion 23, and the fastening bolts 95 are inserted into the insertion holes 23b. A length L2 of the insertion hole 23b in the direction along the axis X1 is set longer than a length L1 of the insertion hole 23b in the direction orthogonal to the axis X1. The insertion hole 23b is formed as an elongated hole so as to reduce the problem that the insertion hole 23b comes into contact with the fastening bolt 95 when the spray pipe 20 thermally elongates thus causing the leg portion 23 to move toward the distal end portion 21a of the pipe portion 21.

In this embodiment, the insertion holes 23b formed in the installation surface 23a of the leg portion 23 are formed as elongated holes, and the insertion holes (not shown in the drawing) formed in the pipe support 91, and the support beam 92, 93 are formed as circular holes having a circular shape. However, another mode may be adopted. For example, the insertion holes 23b formed in the installation surface 23a of the leg portion 23 may be formed as circular holes having a circular shape, and the insertion holes formed in the pipe support 91, and the support beam 92, 93 may be formed as elongated holes where the length L2 in the direction along the axis X1 is set longer than the length L1 in the direction orthogonal to the axis X1. Alternatively, both of the insertion holes 23b formed in the installation surface 23a of the leg portion 23 and the insertion holes formed in the pipe support 91, and the support beam 92, 93 may be formed as elongated holes.

Next, cut-away portions 99a formed in the shim plate 99 are described.

Fig. 11 is a view of the plate-like member taken along arrow VI-VI shown in Fig. 9. As shown in Fig. 11, the cut-away portions 99a which open toward one end of the shim plate 99 are formed in the shim plate 99. The cut-away portion 99a is a portion which allows the insertion of the fastening bolt 95 in a state where the shim plate 99 is disposed between the installation surface 23a of the leg portion 23 and the support surface 92a, 93a of the support beam 92, 93. Further, the cut-away portion 99a is a portion which allows the insertion of the fastening bolt 95 in a state where the shim plate 99 is disposed between the installation surface 23a of the leg portion 23 and the support surface 91a of the pipe support 91 (see Fig. 7).

Since the shim plate 99 has the cut-away portions 99a, the shim plate 99 can be inserted between the installation surface 23a of the leg portion 23 and the support surface 91a of the pipe support 91 without detaching the fastening bolts 95. In the same manner, since the shim plate 99 has the cut-away portions 99a, the shim plate 99 can be inserted between the installation surface 23a of the leg portion 23 and the support surface 92a, 93a of the support beam 92, 93 without detaching the fastening bolts 95. As described above, with the installation of the shim plates 99 at desired portions in installing the leg portions 23, which the spray pipe 20 includes, to the pipe support 91 and the support beam 92, 93, the spray pipe 20 can be adjusted to be disposed in the horizontal direction.

The shim plate 99 is disposed in a state where openings formed in the shim plate 99 are directed toward the distal end portion 21a of the pipe portion 21 along the axis X1. That is, the cut-away portions 99a formed in the shim plate 99 do not open toward the proximal end portion 21b side of the pipe portion 21. With such a configuration, even when a force toward the distal end portion 21a is applied to the shim plate 99 from the leg portion 23, the shim plate 99 comes into contact with the fastening bolts 95 and hence, there is no possibility of the shim plate 99 moving toward the distal end portion 21a. Accordingly, it is possible to prevent the problem that the shim plate 99 moves toward the distal end portion 21a thus escaping from the pipe support 91 or the support beam 92, 93.

Next, a gap CL formed between the distal end portion 21a of the pipe portion 21 of the spray pipe 20 and the inner wall surface of the absorption tower 10 is described.

As shown in Fig. 7, the gap CL is formed between the distal end portion 21a of the pipe portion 21 and the inner wall surface of the absorption tower 10. The gap CL has a distance necessary for preventing the distal end portion 21a of the pipe portion 21 from coming into contact with the inner wall surface of the absorption tower 10. The spray pipe 20 thermally expands due to high temperature exhaust gas. Accordingly, the pipe portion 21 in this embodiment is disposed such that the gap CL can be ensured even when the spray pipe 20 is heated by exhaust gas. That is, in installing the spray pipe 20 (in a state equal to a state of being in an atmospheric temperature), the pipe portion 21 is installed such that the gap CL can be ensured even when the pipe portion 21 thermally elongates. In this embodiment, in a state where the spray pipe 20 is not heated by exhaust gas, the gap CL between the distal end portion 21a of the pipe portion 21 and the inner wall surface of the absorption tower 10 is set to 10 mm or more and 100 mm or less.

Next, the structure for mounting the mounting flange 24 of the spray pipe 20 on the opening portion 14 of the absorption tower 10 is described.

Fig. 12 is a partially enlarged view of the mounting flange 24 and a portion around the mounting flange 24 of the spray pipe 20, shown in Fig. 4, of the desulfurization apparatus 100. As shown in Fig. 12, the opening portion 14 of the absorption tower 10 is formed into a cylindrical shape extending along the axis X1. A flange 14a is formed at an end portion of the opening portion 14. A lining portion 14b made of a resin is formed on an inner peripheral surface of the flange 14a so as to protect the flange 14a from corrosion or the like caused by exhaust gas.

The mounting flange 24 of the spray pipe 20 is mounted on the flange 14a of the opening portion 14 by a plurality of fasteners (not shown in the drawing) with a gasket 14c (made of butyl rubber, for example) interposed therebetween. In this embodiment, when an end surface of the opening portion 14 is inclined from the vertical direction, the spray pipe 20 mounted on the opening portion 14 is inclined from the horizontal direction. Accordingly, to make the end surface of the opening portion 14 agree with the vertical direction, a thickness of a portion of the lining portion 14b which is sandwiched between the end surface of the opening portion 14 and the mounting flange 24 is appropriately adjusted. To make the end surface of the opening portion 14 agree with the vertical direction, a sealant may be applied by coating between the mounting flange 24 and the gasket 14c. The sealant may be applied by coating instead of adjusting a thickness of the lining portion 14b. Alternatively, the sealant may be applied by coating in addition to the adjustment of a thickness of the lining portion 14b.

The manner of operation and advantageous effects which the above-described desulfurization apparatus 100 of this embodiment can acquire are described.

In the spray pipe 20 provided to the desulfurization apparatus 100 of this embodiment, the leg portions 23 each having the installation surface 23a along the horizontal direction are disposed at a plurality of positions on the lower end portion 21d of the pipe portion 21 in the vertical direction. The leg portions 23 are disposed in a state where the installation surfaces 23a are made to oppositely face the support surfaces 91a, 92a, 93a of the pipe support 91, the support beam 92, and the support beam 93 which are installed on the absorption tower 10. Further, a reaction force and an impact force are applied to the spray pipe 20 as the spray pipe 20 injects an absorbing liquid upward, and the reaction force and the impact force are transmitted from the installation surfaces 23a to the support surfaces 91a, 92a, 93a. Accordingly, it is possible to prevent a reaction force and an impact force from being locally applied to the spray pipe 20 thus reducing the problem of damaging the spray pipe 20.

In the spray pipe 20 in this embodiment, the leg portion 23 is arranged at a plurality of positions including the distal end portion 21a of the pipe portion 21. With such a configuration, while a load of the spray pipe 20 is transmitted from the leg portion 23 to the pipe support 91 of the desulfurization apparatus 100 at the distal end portion 21a, the load of the spray pipe 20 can be transmitted from the leg portion 23 to the support beams 92, 93 also at the intermediate portion disposed between the proximal end portion 21b and the distal end portion 21a. Accordingly, compared to the case where a load of the spray pipe 20 is not supported by the intermediate portion, it is possible to reduce the problem of the spray pipe 20 being deflected by its own weight.

The desulfurization apparatus 100 of this embodiment includes the shim plate 99 disposed between the installation surface 23a and the support surface 91a, 92a, 93a. The shim plate 99 is disposed in a state where the cut-away portions 99a, each allowing the insertion of the fastening bolt 95, are opened toward the distal end portion 21a of the pipe portion 21.

To make the injection direction of an absorbing liquid injected from the spray pipe 20 agree with the vertical direction, it is necessary to accurately dispose the spray pipe 20 along the horizontal plane. In disposing the spray pipe 20, by disposing the shim plate 99 having an appropriate thickness between the leg portion 23 and the pipe support 91 or the support beam 92, 93, the spray pipe 20 can be accurately disposed along the horizontal plane.

The spray pipe 20 thermally elongates along the axis X1 due to heating by exhaust gas. When the spray pipe 20 thermally elongates, a force toward the distal end portion 21a of the pipe portion 21 is applied from the leg portion 23 to the shim plate 99 disposed in contact with the leg portion 23. The shim plate 99 is disposed in a state where the cut-away portions 99a do not open toward the proximal end portion 21b side of the pipe portion 21. Accordingly, even when a force toward the distal end portion 21a is applied to the shim plate 99 from the leg portion 23, the shim plate 99 comes into contact with the fastening bolts 95 and hence, there is no possibility of the shim plate 99 moving toward the distal end portion 21a. Accordingly, it is possible to prevent the problem that the shim plate 99 moves toward the distal end portion 21a thus escaping from the pipe support 91 or the support beam 92, 93.

In the desulfurization apparatus 100 of this embodiment, the insertion holes 23b into which the fastening bolts 95 are respectively inserted are formed in the installation surface 23a of the leg portion 23. The length L2 of the insertion hole 23b in the direction along the axis X1 is set longer than the length L1 of the insertion hole 23b in the direction orthogonal to the axis X1.

The spray pipe 20 thermally elongates along the axis X1 due to heating by exhaust gas. When the spray pipe 20 thermally elongates, the leg portion 23 mounted on the spray pipe 20 moves toward the distal end portion 21a of the pipe portion 21. According to this embodiment, the length L2 of the insertion hole 23b in the direction along the axis X1 is set longer. Therefore, it is possible to reduce the problem that the insertion hole 23b comes into contact with the fastening bolt 95 when the leg portion 23 moves due to thermal elongation.

In the desulfurization apparatus 100 of this embodiment, each pipe portion 21 is disposed so as to avoid contact with the inner peripheral surface of the absorption tower 10 in a state where the pipe portion 21 is heated by exhaust gas.

With such a configuration, it is possible to reduce the problem that the pipe portion 21 is heated by exhaust gas thus thermally elongating and, as a result, the distal end portion 21a of the pipe portion 21 comes into contact with the inner peripheral surface of the absorption tower 10.

In the description made heretofore, the desulfurization apparatus 100 is an apparatus which uses the lime-gypsum method where an absorbing liquid containing lime is brought into gas-liquid contact with exhaust gas thus removing sulfur oxides contained in the exhaust gas. However, the desulfurization apparatus 100 may adopt another mode. For example, the desulfurization apparatus 100 may be a desulfurization apparatus which uses a seawater desulfurization method where seawater containing an alkaline component is used as an absorbing liquid.

In the description made heretofore, the mounting flange 24 of the spray pipe 20 is mounted on the flange 14a of the opening portion 14 of the absorption tower 10. However, another mode may be adopted. For example, when the flange 14a is not formed on the opening portion 14 of the absorption tower 10, the mounting flange 24 may be directly mounted on a side wall of the absorption tower 10 using fasteners.

### [Reference Signs List]

- 10: absorption tower
- 11: exhaust gas introduction portion
- 12: exhaust gas discharge portion
- 13: bottom portion
- 14: opening portion
- 14a: flange
- 14b: lining portion
- 14c: gasket
- 15: access hatch
- 20: spray pipe
- 21: pipe portion
- 21a: distal end portion
- 21b: proximal end portion
- 21c: upper end portion
- 21d: lower end portion
- 22: nozzle portion
- 22a: spray nozzle
- 22b: nozzle holder
- 22c: gasket
- 23: leg portion
- 23a: installation surface (first surface)
- 23b: insertion hole
- 24: mounting flange
- 25: supply port
- 30: demister
- 40: circulation pump
- 91: pipe support (support portion)
- 91a: support surface (second surface)
- 92, 93: support beam (support portion)
- 92a, 93a: support surface (second surface)
- 95: fastening bolt (fastening portion)
- 96: fastening nut (fastening portion)
- 97: fastening nut (fastening portion)
- 98: washer
- 99: shim plate (plate-like member)
- 99a: cut-away portion
- 100: desulfurization apparatus
- CL: gap
- X1, X2: axis

## Claims

1. A spray pipe which is disposed along a horizontal direction in an absorption tower formed extending along a vertical direction to form a passage for exhaust gas, the spray pipe comprising:
a pipe portion having a cylindrical shape, and configured to extend along an axis in the horizontal direction, a distal end portion of the pipe portion being closed;
a plurality of nozzle portions configured to guide an absorbing liquid, flowing through the pipe portion in the horizontal direction, upward in a vertical direction, the plurality of nozzle portions being arranged at a plurality of positions on an upper end portion of the pipe portion in the vertical direction; and
a leg portion disposed on a lower end portion of the pipe portion in the vertical direction, and having a first surface along the horizontal direction, wherein
the leg portion is disposed in a state where the first surface is made to oppositely face a second surface of a support portion installed on the absorption tower, the second surface extending along the horizontal direction.

2. The spray pipe according to claim 1, wherein
the leg portion is arranged at a plurality of positions including the distal end portion of the pipe portion.

3. The spray pipe according to claim 1 or 2, wherein
the pipe portion is made of fiber-reinforced plastic.

4. The spray pipe according to any one of claim 1 to claim 3, wherein
a length of the pipe portion along the axis from a proximal end portion to the distal end portion is set to 3 m or more and 15 m or less, and an outer diameter of the pipe portion is set to 200 mm or more and 400 mm or less.

5. A desulfurization apparatus comprising:
an absorption tower formed extending along a vertical direction to form a passage for exhaust gas;
a spray pipe disposed in the absorption tower along a horizontal direction;
a support portion installed on the absorption tower so as to support the spray pipe; and
a fastening portion configured to fasten the spray pipe and the support portion to each other, wherein
the spray pipe includes:
a pipe portion having a cylindrical shape, and configured to extend along an axis in the horizontal direction, a distal end portion of the pipe portion being closed;
a plurality of nozzle portions configured to guide an absorbing liquid, flowing through the pipe portion in the horizontal direction, upward in the vertical direction, the plurality of nozzle portions being arranged at a plurality of positions on an upper end portion of the pipe portion in the vertical direction; and
a leg portion disposed on a lower end portion of the pipe portion in the vertical direction, and having a first surface along the horizontal direction, wherein
the support portion has a second surface along the horizontal direction, and
the spray pipe is fastened to the support portion by the fastening portion in a state where the first surface is made to oppositely face the second surface.

6. The desulfurization apparatus according to claim 5 further comprising a plate-like member disposed between the first surface and the second surface, wherein
the fastening portion includes a fastening bolt and a fastening nut fastened to the fastening bolt,
the plate-like member has a cut-away portion which allows insertion of the fastening bolt in a state where the plate-like member is disposed between the first surface and the second surface, and
the plate-like member is disposed in a state where the cut-away portion is opened toward the distal end portion of the pipe portion.

7. The desulfurization apparatus according to claim 6, wherein
an insertion hole into which the fastening bolt is inserted is formed in the first surface of the leg portion, and
a length of the insertion hole in a direction along the axis is set longer than a length of the insertion hole in a direction orthogonal to the axis.

8. The desulfurization apparatus according to any one of claim 5 to claim 7, wherein
the pipe portion is disposed so as to avoid contact with an inner peripheral surface of the absorption tower in a state where the pipe portion is heated by exhaust gas.

9. The desulfurization apparatus according to claim 8, wherein
a distal end portion of the pipe portion is disposed with a gap of 10 mm or more and 100 mm or less formed between the distal end portion and the inner wall surface of the absorption tower in a state where the pipe portion is not heated by exhaust gas.
